# FASCICULE DE BREVET EUROPEEN

(11) **EP 0 911 788 B1**
(45) Date de publication et mention de la délivrance du brevet: **09.07.2003**
(21) Numéro de dépôt: 98410122.0
(22) Date de dépôt: 22.10.1998
(51) Int. Cl.: G09F 3/12, A01K 11/00

(54) **Dispositif d'identification**
Identifizierungsvorrichtung
Identification device

(30) Priorité: 24.10.1997 FR 9713594
(43) Date de publication de la demande: 28.04.1999
(73) Titulaire: Reyflex, 74300 Cluses (FR)
(72) Inventeur: Nepote,Alain, 74300 Cluses (FR)
(74) Mandataire: Gasquet, Denis

(56) Documents cités:
- EP-A- 0 105 796
- US-A- 4 581 834
- US-A- 4 785 563

## Description

La présente invention concerne un dispositif d'identification, notamment, pour l'identification des animaux. Elle concerne plus particulièrement ses moyens d'accrochage sur l'animal à identifier. Bien que le dispositif selon l'invention soit plus particulièrement destiné à l'identification des animaux, il peut être utilisé pour identifier tout autre élément comme, par exemple, des bagages ou des sacs de golf, ou tout autre objet.

L'identification des animaux, et notamment des animaux d'élevage destinés à la consommation, a toujours été un problème préoccupant pour l'homme et en particulier dans nos pays industrialisés où il est nécessaire de connaître la provenance, le lieu d'élevage et l'historique de l'animal, notamment, avant sa mise dans le circuit de consommation. Ces problèmes apparaissent d'ailleurs comme de plus en plus sensibles et importants à l'heure actuelle, et ce, notamment en raison de la crise dite de la "vache folle".

Il existe de nombreux types de dispositifs d'identification tels que les bagues, les tatouages ou les boucles d'identification. Ces dernières sont avantageusement destinées à être fixées à l'oreille de l'animal. Elles comportent généralement un marquage par jet d'encre ou au laser, destiné à identifier l'animal ainsi que son lieu d'élevage, par exemple. Cependant, ces boucles d'identification présentent le plus souvent des inconvénients au niveau de leurs dispositifs d'accrochage tant dans la tenue et la résistance à l'arrachement que dans le confort et la cicatrisation de l'oreille de l'animal.

Ainsi, ces dispositifs d'identification possèdent généralement des moyens d'accrochage dont l'efficacité et la fiabilité ne sont pas suffisantes et qui, dans leur agencement, ne sont pas suffisamment adaptés à l'animal, lui provoquant le plus souvent des petites lésions ou des déchirements de l'oreille.

Ainsi, la présente invention se propose de résoudre les inconvénients précités grâce à des moyens simples, fiables, sûrs, efficaces et peu onéreux qui permettent avantageusement d'obtenir un accrochage efficace du dispositif d'identification sur l'animal ou sur l'objet à identifier et qui évitent tout risque de blessure de l'animal ou d'arrachement du dispositif, notamment.

Le dispositif d'identification selon l'invention est du type constitué par une boucle d'identification formée par un élément mâle et un élément femelle qui comportent chacun des moyens d'accrochage complémentaires destinés à coopérer ensemble les moyens d'accrochage de l'élément mâle étant constitués par au moins un profil en saillie présentant un ensemble de crans de retenue de forme tronconique ou équivalente, ledit ensemble comportant au moins deux crans portés par une tige ou doigt d'accrochage, tel que divulgué, par exemple, par US-A-4 785 563, mais caracterisé en outre par le fait que les bases respectives des crans de retenue présentent respectivement des diamètres de taille différente augmentent de l'extrémité arrière du profil en saillie vers l'extrémité avant de celui ci.

Selon un mode de réalisation préféré du dispositif d'identification selon l'invention, les moyens d'accrochage de l'élément mâle comportent trois crans de retenue portés par le doigt d'accrochage.

Selon une autre caractéristique, le dispositif d'identification est caractérisé en ce que les moyens d'accrochage de l'élément mâle comportent une pointe de perçage conique disposée à l'extrémité arrière du profil en saillie dans le prolongement de l'ensemble des crans de retenue.

Selon une variante d'exécution, la pointe de perçage conique présente à sa pointe, dans un plan de symétrie médian, un angle de perçage α inférieur à 59°.

Selon une autre caractéristique du dispositif d'identification, les crans de retenue de forme tronconique présentent, dans un plan de symétrie médian, un angle d'inclinaison respectif de leur génératrice par rapport à l'axe de révolution du profil en saillie qui diffère en fonction de leur position respective dans l'ensemble des crans de retenue.

Selon un mode de réalisation du dispositif d'identification, l'angle d'inclinaison du premier cran de retenue situé à l'arrière de l'ensemble des crans est sensiblement égal à 45° et en ce que l'angle d'inclinaison des autres crans de retenue est sensiblement égal à 30°.

Selon une caractéristique complémentaire du dispositif d'identification selon l'invention, celui ci comporte des moyens d'inviolabilité, tel qu'une amorce de rupture formée par deux encoches latérales disposées à l'extrémité arrière du doigt d'accrochage, lesdites encoches comportant un profil délimitant une section de rupture partiellement circulaire.

Selon une autre caractéristique, le dispositif d'identification est réalisé en matière plastique par injection.

D'autres caractéristiques et avantages de l'invention se dégageront de la description qui va suivre en regard des dessins annexés qui ne sont donnés qu'à titre d'exemples non limitatifs.

Les figures 1 à 10 représentent le mode de réalisation préféré du dispositif d'identification.

La figure 1 représente une vache munie du dispositif d'identification selon l'invention.

Les figures 2a, 2b, 2c représentent schématiquement les étapes de mise en place du dispositif sur l'animal.

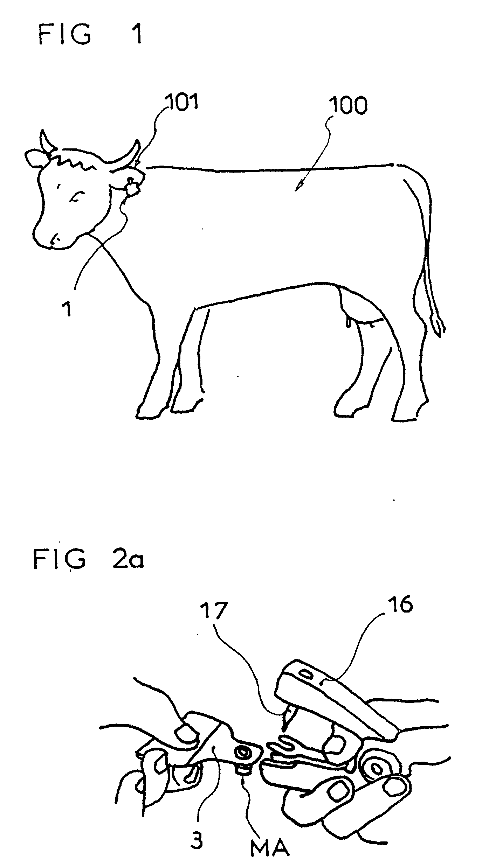

La figure 2a représente la mise en place de l'élément femelle sur la pince.

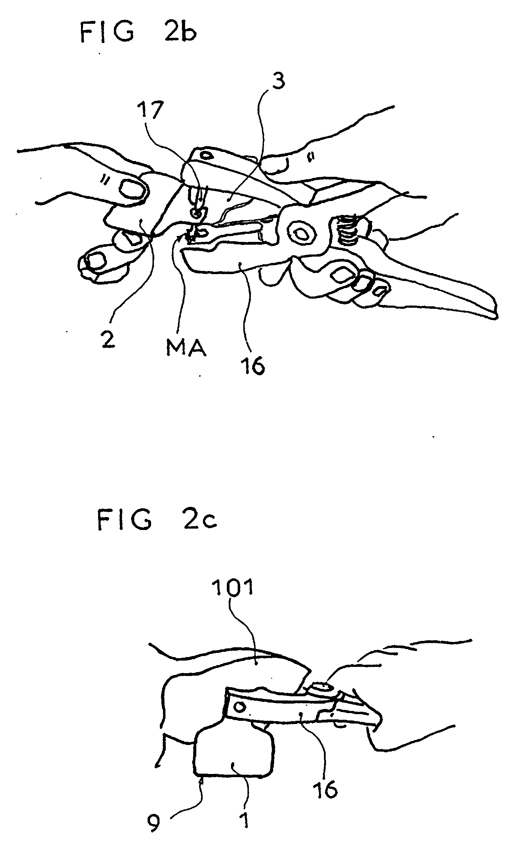

La figure 2b illustre le positionnement de l'élément mâle sur la pince.

La figure 2c représente la mise en place proprement dite du dispositif à l'aide de la pince.

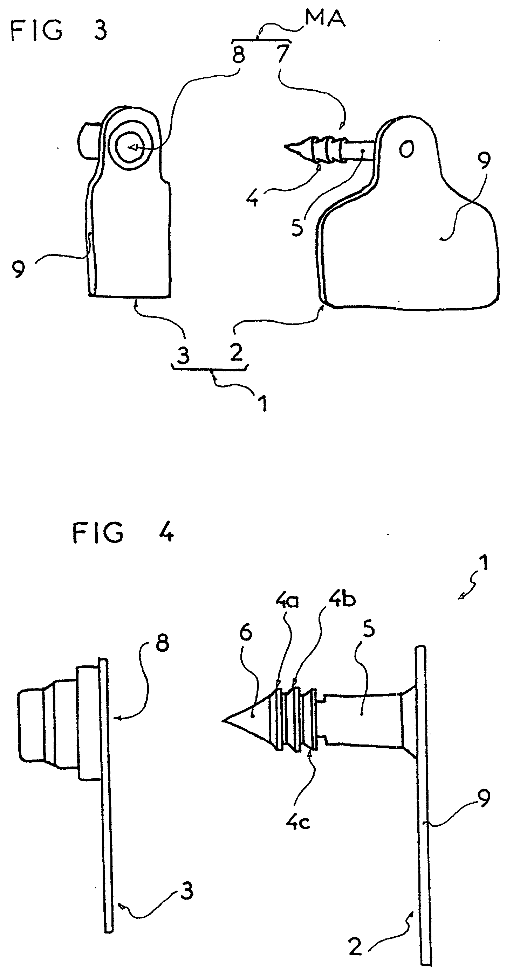

La figure 3 est une vue en perspective du dispositif d'identification avant sa mise en place sur l'animal.

La figure 4 illustre en vue latérale le dispositif d'identification.

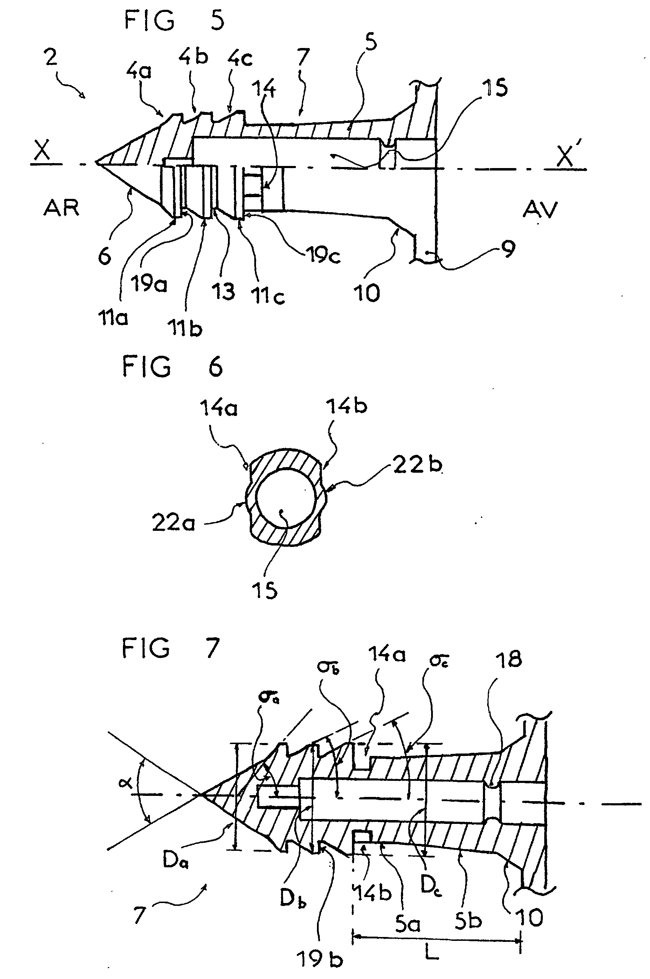

La figure 5 illustre en demi-coupe longitudinale les moyens d'accrochage de l'élément mâle.

La figure 6 représente en coupe transversale une section du profil en saillie de l'élément mâle.

La figure 7 représente les moyens d'accrochage de l'élément mâle en coupe longitudinale.

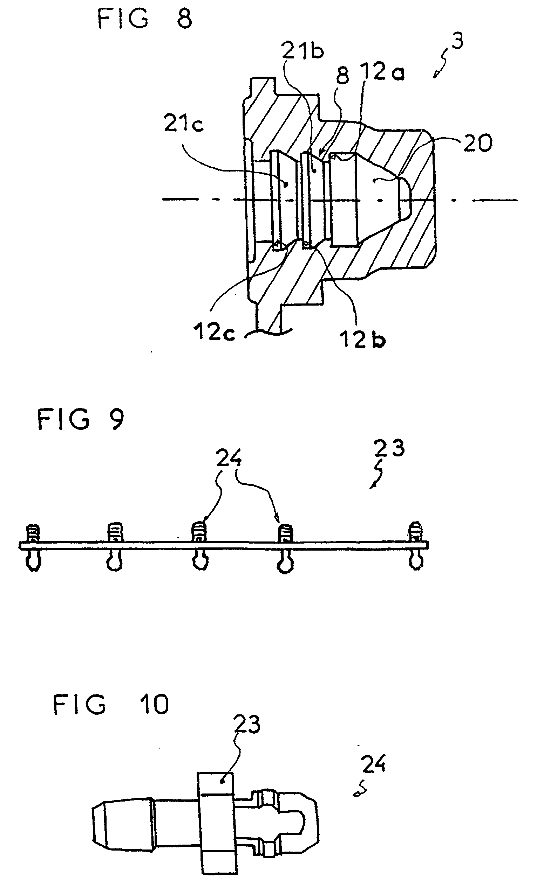

La figure 8 illustre l'élément femelle et ses moyens d'accrochage en coupe longitudinale.

La figure 9 illustre en vue de dessus une barrette de stockage destiné au stockage de plusieurs dispositifs d'identification.

La figure 10 illustre en détail un téton de maintien de la barrette de stockage.

Selon l'invention, le dispositif d'identification portant la référence générale (1) est constitué par une boucle d'identification et est destiné à l'identification d'un animal (100) tel qu'une vache, par exemple.

La boucle est avantageusement fixée sur l'oreille (101) de l'animal (100) comme le montre les figures 1, 2a, 2b et 2c. Elle est constituée de deux éléments (2, 3): un premier élément appelé élément mâle (2), et un deuxième élément appelé élément femelle (3). Ces deux éléments du dispositif d'identification (1) sont destinés à coopérer ensemble pour permettre leur accrochage grâce à des moyens d'accrochage (MA) complémentaires disposés sur chacun d'eux. Ils présentent chacun une paroi (9) destinée à supporter l'information ou l'identification sous la forme d'un marquage à l'encre ou au laser ou sous la forme d'une étiquette électronique.

Selon le mode de réalisation préféré de l'invention, et comme le montrent les figures 3 et 4, les moyens d'accrochage (MA) sont constitués par au moins un profil en saillie (7) disposé sur l'élément mâle (2) destiné à coopérer avec un logement en creux (8) de l'élément femelle (3) dont le profil est de forme complémentaire. Le profil en saillie (7) présente avantageusement un ensemble de crans de retenue (4) de forme tronconique, disposés de manière successive sur une tige appelée également doigt d'accrochage (5). Selon le mode de réalisation illustré figures 3 à 8, le profil en saillie (7) comporte avantageusement trois crans de retenue (4a, 4b, 4c) disposés successivement sur le doigt d'accrochage (5) et orientés de manière identique. Il va de soi que le nombre de crans de retenue pourrait être différent sans pour autant sortir du champ de protection de l'invention.

Selon le mode de réalisation préféré, les crans de retenue (4a, 4b, 4c) sont en fait, des portions de cônes dont la pointe a été tronquée et qui sont disposées de manière à pointer chacune vers l'extrémité arrière (AR) du profil en saillie (7) à l'opposé du support d'information (9) de l'élément mâle qui est disposé sur la base du doigt d'accrochage (5). Comme le montre la figure 7, l'inclinaison dans un plan médian des génératrices des différents crans de retenue (4a, 4b, 4c) peut être différente selon le cran considéré, en fonction de sa position dans la succession des crans de retenue. Ainsi, dans le mode de réalisation illustré, le premier cran de retenue (4a) situé à l'extrémité arrière possède, dans un plan longitudinal médian de symétrie, une inclinaison des génératrices par rapport à l'axe de révolution (XX') du profil en saillie (7) d'un angle σa sensiblement égal à 45°, alors que les deux autres crans de retenue (4b, 4c) présentent des angles d'inclinaison respectifs de leurs génératrices σb et σc identiques et sensiblement égaux à 30°.

Selon le mode de réalisation préféré de l'invention, le profil en saillie (7) porte à son extrémité arrière (AR) une pointe de perçage (6) avantageusement conique destinée à permettre le perçage de l'oreille (101) de l'animal (100). L'angle de perçage α, c'est-à-dire l'angle présenté par le sommet de la pointe (6) dans un plan longitudinal médian, est avantageusement un angle aigu inférieur ou égal à 60°, tel qu'illustré figure 7. Ainsi, le profil en saillie (7) se présente sous la forme d'une pointe conique de perçage (6) disposée sur un ensemble de crans de retenues (4) avantageusement au nombre de trois et qui constituent respectivement les moyens de perçage et les moyens de verrouillage du dispositif (1), ces moyens étant portés par le doigt d'accrochage (5).

Selon le mode de réalisation préféré illustré notamment figures 4 à 7, le doigt d'accrochage (5) comporte une portion arrière (5a) de forme cylindrique qui porte les crans de retenue (4) à son extrémité arrière, ladite portion arrière prolongeant une portion avant (5b) de forme légèrement conique dont le diamètre augmente d'arrière (AR) en avant (AV) et à l'extrémité de laquelle est disposée la paroi transversale (9) qui constitue le support d'information. Notons que des moyens de renfort peuvent être disposés à l'extrémité avant ou base du doigt d'accrochage et sont constitués par un renfort annulaire (10) reliant la portion avant (5b) au support d'information (9).

Selon le mode de réalisation préféré du dispositif d'identification (1), les crans de retenue (4a, 4b, 4c) possèdent chacun à l'avant au niveau de leur base la plus grande un prolongement cylindrique (11) destiné à coopérer en appui sur des surfaces de butée (12a, 12b, 12c) du logement en creux (8) complémentaire de l'élément femelle (3). Notons également que les crans de retenue et leurs prolongements cylindriques respectifs peuvent être séparés par une portion de cylindre intermédiaire (13) dont le diamètre est équivalent au petit diamètre sommital du cran de retenue tronconique qui est prolongé vers l'arrière.

Cependant, il va de soi que les crans de retenue pourraient ne pas être munis de prolongements cylindriques et n'être pas séparés par une portion cylindrique intermédiaire sans pour autant sortir du champ de protection de l'invention.

Les crans de retenue (4a, 4b, 4c) peuvent présenter des diamètres différents au niveau de leur base, c'est-à-dire des diamètres différents de leurs prolongements cylindriques respectifs (11a, 11b, 11c). Selon le mode de réalisation préféré de l'invention et afin de ne pas blesser l'animal lors de la phase de perçage, les diamètres respectifs précités Da, Db, Dc des prolongements cylindriques augmentent faiblement de l'arrière vers l'avant, comme le montre la figure 7. Ainsi, le premier cran de retenue (4a) présente, par exemple, un diamètre Da de 7, 05 mm, tandis que les autres crans (4b, 4c) présentent des diamètres respectifs Db, Dc, respectivement de 7, 2 et 7, 3 mm, ceci permettant également de faciliter la mise en place du profil en saillie (7) et plus particulièrement de ses moyens de perçage (6) et de verrouillage (4) dans le logement en creux (8) de l'élément femelle (3). Notons que les diamètres des crans de retenue (4) sont avantageusement inférieurs à 7, 5 mm afin de minimiser le déchirement de l'oreille de l'animal lors de la mise en place du dispositif (1).

Selon le mode de réalisation préféré du dispositif d'identification (1), il comporte des moyens d'inviolabilité ou de sûreté (14) destinés à empêcher son enlèvement lorsque l'élément mâle (2) et l'élément femelle (3) ont été accrochés ensemble autour de l'oreille de l'animal ; ces moyens étant destinés à détruire ou à détériorer la boucle d'identification (1) lors de sa tentative d'enlèvement pour empêcher toute réutilisation postérieure de ladite boucle. Ces moyens d'inviolabilité sont avantageusement constitués par un rétrécissement de section (14) qui est positionné sur le doigt d'accrochage (5) et qui est appelé couramment une amorce de rupture, ledit rétrécissement pouvant être obtenu par deux encoches ou fentes latérales (14a, 14b), tel qu'illustré figures 4, 6 et 7. L'amorce de rupture (14) peut avantageusement être située dans la portion arrière (5a) du doigt d'accrochage (5) sensiblement à proximité de l'ensemble de crans de retenue (4). Toutefois, les moyens d'inviolabilité pourraient être de toute autre forme ou obtenus par des moyens différents équivalents, sans pour autant sortir du champ de protection de l'invention. Notons que le rétrécissement de section (14) obtenu à l'aide des encoches latérales présente des moyens de renfort de la résistance à la torsion constitués par la forme particulière de sa section comme le montre la figure 6. Celle ci possède latéralement dans chacune des fentes (14a, 14b) une portion de profil cylindrique (22a, 22b) permettant de conserver une épaisseur de paroi du doigt (5) sensiblement constante entre la paroi externe et un alésage interne (15) décrit ultérieurement sur lesdites portions de profil cylindrique à l'intérieur desdites encoches, ainsi les encoches latérales forment une section de rupture présentant un profil partiellement circulaire.

Notons, par ailleurs, que le doigt d'accrochage (5) possède une longueur L supérieure à 9 mm et avantageusement égale à 11 mm afin d'obtenir un éloignement suffisant des éléments mâle (2) et femelle (3) de manière à diminuer la gêne pour l'animal créée par le dispositif. De plus, le doigt d'accrochage (5) comporte un alésage interne (15) destiné au positionnement de la tige ou pointeau (17) de la pince (16) destinée à la mise en place de la boucle (1) illustrée figures 2a, 2b et 2c. Notons que l'alésage (15) est avantageusement de forme cylindrique et permet ainsi d'obtenir une épaisseur de paroi constante longitudinalement le long du rétrécissement de section (14) de manière à connaître parfaitement la résistance au cisaillement de cette section. Ainsi, le diamètre de l'alésage interne peut être choisi en fonction de la résistance au cisaillement que l'on veut obtenir. Il va de soi que l'alésage interne du doigt pourrait être de forme différente telle que tronconique par exemple sans pour autant sortir du champs de protection de l'invention.

Selon le mode de réalisation préféré et comme le montre la figure 5, le doigt d'accrochage (5) comporte des moyens de positionnement (18) destinés à favoriser le stockage de l'élément mâle (2) sur une barrette (23) comme celle illustrée figures 9 et 10 par exemple ou à faciliter la mise en place du pointeau (17) dans l'alésage (15), lesdits moyens étant avantageusement constitués par un bourrelet annulaire de positionnement (18) disposé à la base du doigt dans l'alésage interne (15). Notons que la barrette de stockage (23) est destinée à stocker en vis à vis les éléments femelles et les éléments mâles de plusieurs dispositifs d'identification. Chaque élément du dispositif étant disposé sur les extrémités opposées d'un téton de stockage (24) de la barrette qui comporte de manière connue en soi des formes complémentaires de celles de l'alésage inteme du doigt et du logement en creux comme le montre la figure 10.

Selon le mode de réalisation préféré de l'invention, l'élément femelle (3) présente un logement en creux (8) à l'intérieur duquel sont destinés à venir se positionner et se verrouiller la pointe de perçage (6) et l'ensemble des crans de retenue (4), chacun des crans de retenue (4a, 4b, 4c) venant présenter une surface d'appui avant (19a, 19b, 19c) transversale contre des surfaces de butée (12a, 12b, 12c) complémentaires de l'élément femelle (3). Notons que la forme du logement en creux (8) est complémentaire au jeu près de celle du profil en saillie (7), et plus particulièrement de celle du sous ensemble crans de retenue - pointe de perçage, disposé sur le doigt d'accrochage (5), ledit logement comportant une cavité interne d'extrémité (20) destinée au positionnement de la pointe de perçage (6) et du premier cran de retenue (4a) et dont les dimensions sont supérieures et ne sont pas forcément ajustées aux dimensions de ladite pointe. Le logement (8) comporte ainsi la cavité (20) au fond dudit logement et des logements de cônes (21b, 21c) ajustés aux crans de retenue (4b, 4c). Notons que le premier cran de retenue (4a) de l'élément mâle (2) vient présenter sa surface d'appui (19a) contre une surface de butée (12a) qui fait partie de la cavité d'extrémité (20).

Selon l'invention, le dispositif d'identification est avantageusement réalisé en matière plastique par un procédé d'injection, par exemple, la matière utilisée devant être rigide mais légèrement élastique, de manière à pouvoir faire coopérer le profil en saillie (7) et le logement en creux (8) par emmanchement, ledit emmanchement s'effectuant par la déformation élastique du profil de retenue en creux de l'élément femelle. Il va de soi que la forme du logement ou le nombre de crans de retenue du profil en saillie pourraient être différents, sans pour autant sortir du champ de protection de l'invention. De même, le dispositif d'identification pourrait être obtenu dans d'autres matériaux que les matières plastiques et être réalisé autrement que par injection.

Par ailleurs, il peut être prévu des moyens d'indexation de la boucle d'identification destinés à empêcher le pivotement relatif entre l'élément mâle et l'élément femelle autour de l'axe de révolution (XX'). Pour cela, l'élément femelle peut comporter deux pattes latérales d'indexation non représentées destinée à coopérer par exemple avec les encoches latérales de l'amorce de rupture de l'élément mâle de manière à solidariser les éléments mâle et femelle en rotation autour de l'axe (XX').

Notons également que le mode de réalisation décrit est muni d'un profil en saillie et d'un logement en creux qui présente un axe longitudinal de révolution, cependant il va de soi que les crans de retenue de forme tronconiques pourrait être constituée par des formes géométriques différentes équivalentes tels que des crans pyramidaux ou tétraédriques par exemple.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif d'identification (1), du type constitué par une boucle d'identification formée par un élément mâle (2) et un élément femelle (3) qui comportent chacun des moyens d'accrochage (MA) complémentaires destinés à coopérer ensemble, les moyens d'accrochage (MA) de l'élément mâle (2) étant constitués par au moins un profil en saillie (7) présentant un ensemble de crans de retenue (4) de forme tronconique ou équivalente, ledit ensemble comportant au moins deux crans portés par une tige ou doigt d'accrochage (5), destinés à coopérer avec un logement en creux (8) de l'élément femelle (3) qui comprend un profil de forme complémentaire ajustée aux crans de retenue, **caractérisé en ce que** les crans de retenue (4) de forme tronconique, présentent respectivement des diamètres (Da, Db, Dc) de taille différente, qui augmentent de l'arrière vers l'avant du profil en saillie.

2. Dispositif d'identification (1) selon la revendication 1, **caractérisé en ce que** les moyens d'accrochage (MA) de l'élément mâle (2) comportent trois crans de retenue (4a, 4b, 4c) portés par le doigt d'accrochage (5).

3. Dispositif d'identification (1) selon l'une quelconque des revendications précédentes, **caractérisé en ce que** les moyens d'accrochage (MA) de l'élément mâle (2) comportent une pointe de perçage (6) conique disposée à l'extrémité arrière du profil en saillie (7) dans le prolongement de l'ensemble des crans de retenue.

4. Dispositif d'identification (1) selon la revendication 3, **caractérisé en ce que** la pointe de perçage conique (6) présente à sa pointe, dans un plan de symétrie médian, un angle de perçage □ inférieur à 59°.

5. Dispositif d'identification (1) selon l'une quelconque des revendications précédentes, **caractérisé en ce que** les crans de retenue de forme tronconiques (4a, 4c, 4c) présentent, dans un plan de symétrie médian, un angle d'inclinaison (σa, σb, σc) respectif de leur génératrice par rapport à l'axe de révolution (XX') du profil en saillie (7) qui diffère en fonction de leur position dans l'ensemble des crans de retenue.

6. Dispositif d'identification (1) selon la revendication 5, **caractérisé en ce que** l'angle d'inclinaison du premier cran de retenue (4a) situé à l'arrière de l'ensemble des crans est sensiblement égal à 45° et **en ce que** l'angle d'inclinaison (σb, σc) des autres crans de retenue (4b, 4c) est sensiblement égal à 30°.

7. Dispositif d'identification (1) selon l'une quelconque des revendications précédentes, **caractérisé en ce qu'**il comporte des moyens d'inviolabilité, tel qu'une amorce de rupture (14) formée par deux encoches latérales (14a, 14b) disposées à l'extrémité arrière du doigt d'accrochage (5), lesdites encoches comportant un profil délimitant une section de rupture partiellement circulaire (22a, 22b).

8. Dispositif d'identification (1) selon l'une quelconque des revendications précédentes, **caractérisé en ce qu'**il est réalisé en matière plastique par injection.

## Patentansprüche

1. Identifizierungsvorrichtung (1) bestehend aus einer Identifizierungsschnalle, die durch ein männliches Teil (2) und ein weibliches Teil (3) gebildet wird, welche jeweils einander ergänzende, ineinandergreifende Aufhängemittel (MA) aufweisen, wobei die Aufhängemittel (MA) des männlichen Teils (2) aus mindestens einem vorspringengen Profil (7) bestehen, das mit einem Satz Haltekerben (4) versehen ist, die eine konische oder ähnliche Form aufweisen, wobei der Satz Haltekerben mindestens zwei Kerben aufweist, die an einem Aufhängestift oder -zapfen (5) angebracht sind und mit einer mit einem dazu komplementären Profil versehenen Aufnahmevertiefung (8) des weiblichen Teils (3) in Eingriff kommen sollen, **dadurch gekennzeichnet, dass** die konische Haltekerben (4) jeweils unterschiedliche Durchmesser (Da, Db, Dc) aufweisen, die vom hinteren zum vorderen Teil des vorspringenden Profils hin zunehmen.

2. Identifizierungsvorrichtung (1) nach Anspruch 1, **dadurch gekennzeichnet, dass** die Aufhängemittel (MA) des männlichen Teils (2) drei Haltekerben (4a, 4b, 4c) aufweisen, die an dem Aufhängezapfen (5) angebracht sind.

3. Identifizierungsvorrichtung (1) nach einem der vorstehenden Ansprüche, **dadurch gekennzeichnet, dass** die Aufhängemittel (MA) des männlichen Teils (2) eine konische Durchstechnadel (6) aufweisen, die am hinteren Ende des vorspringenden Profils (7) in der Verlängerung der Haltekerben angeordnet ist.

4. Identifizierungsvorrichtung (1) nach Anspruch 3, **dadurch gekennzeichnet, dass** die konische Durchstechnadel (6) an ihrer Spitze in einer mittleren Symmetrieebene einen Durchstechwinkel α von weniger als 59° bildet.

5. Identifizierungsvorrichtung (1) nach einem der vorstehenden Ansprüche, **dadurch gekennzeichnet, dass** die Erzeugende der jeweiligen abgeschrägten Haltekerben (4a, 4b, 4c) in einer mittleren Symmetrieebene einen Neigungswinkel (σa, σb, σc) zur Drehachse (XX') des vorspringenden Profils (7) einschließt, der in Abhängigkeit der Stellung der Haltekerben innerhalb des Satzes Haltekerben unterschiedlich ist.

6. Identifizierungsvorrichtung (1) nach Anspruch 5, **dadurch gekennzeichnet, dass** der Neigungswinkel der ersten, im Satz Haltekerben hinten angeordneten Haltekerbe (4a) ca. 45° beträgt und dass der Neigungswinkel (σb, σc) der anderen Haltekerben (4b, 4c) ca. 30° beträgt.

7. Identifizierungsvorrichtung (1) nach einem der vorstehenden Ansprüche, **dadurch gekennzeichnet, dass** sie aufbruchsichere Mittel umfasst, beispielsweise eine Sollbruchstelle (14), die durch zwei seitliche, am hinteren Ende des Aufhängezapfens (5) angeordnete Einkerbungen (14a, 14b) gebildet ist, wobei diese Einkerbungen ein Profil aufweisen, das eine teilweise kreisförmige Bruchstelle (22a, 22b) begrenzt.

8. Identifizierungsvorrichtung (1) nach einem der vorstehenden Ansprüche, **dadurch gekennzeichnet, dass** sie aus Kunststoffguss hergestellt ist.

## Claims

1. Identification device (1), of the type consisting of an identification tag formed by a male element (2) and a female element (3), each having complementary fastening means (MA) designed to interact with each other, the fastening means (MA) of the male element (2) consisting of at least one projecting profile (7) having a set of retaining catches (4) of truncated conical or equivalent shape, the said set comprising at least two catches carried by a fastening stem or stud (5), designed to interact with a hollow housing (8) of the female element (3), which comprises a profile of complementary shape made to fit the retaining catches, **characterized in that** the diameters (Da, Db, Dc) of the retaining catches (4) of truncated conical shape are different from each other and increase from the rear to the front of the projecting profile.

2. Identification device (1) according to Claim 1, **characterized in that** the fastening means (MA) of the male element (2) comprise three retaining catches (4a, 4b, 4c) carried by the fastening stud (5).

3. Identification device (1) according to any one of the preceding claims, **characterized in that** the fastening means (MA) of the male element (2) comprise a conical piercing point (6) located at the rear end of the projecting profile (7) in the extension of the set of retaining catches.

4. Identification device (1) according to Claim 3, **characterized in that** the conical piercing point (6) has a piercing angle α of less than 59° at its point in a median plane of symmetry.

5. Identification device (1) according to any one of the preceding claims, **characterized in that** the retaining catches of conical shape (4a, 4c, 4c) have respective angles (σa, σb, σc) of inclination of their generatrices with respect to the axis of revolution (XX') of the projecting profile (7) which differ according to their positions in the set of retaining catches.

6. Identification device (1) according to Claim 5, **characterized in that** the angle of inclination of the first retaining catch (4a) located at the rear of the set of catches is practically equal to 45° and **in that** the angles of inclination (σb, σc) of the other retaining catches (4b, 4c) are practically equal to 30°.

7. Identification device (1) according to any one of the preceding claims, **characterized in that** it comprises tamper-proofing means, such as a break point (14) formed by two lateral notches (14a, 14b) located at the rear end of the fastening stud (5), the said notches having a profile delimiting a partially circular break section (22a, 22b).

8. Identification device (1) according to any one of the preceding claims, **characterized in that** it is made from plastic material by injection moulding.
